# EUROPÄISCHE PATENTSCHRIFT

(11) **EP 3 760 369 B1**
(45) Veröffentlichungstag und Bekanntmachung des Hinweises auf die Patenterteilung: **12.01.2022**
(21) Anmeldenummer: 20183700.2
(22) Anmeldetag: 02.07.2020
(51) Int. Cl.: B23P 15/28, B23F 19/05, B23F 21/03

(54) **HONRING ZUR OBERFLÄCHENBEARBEITUNG VERZAHNTER WERKSTÜCKE, SOWIE VERFAHREN ZUR HERSTELLUNG DES HONRINGS**
HONING RING FOR SURFACE MACHINING OF TOOTHED WORKPIECES AND METHOD OF MANUFACTURING THE RING
BAGUE À PIERRER DESTINÉE À L'USINAGE DE SURFACES DE PIÈCES DENTÉES ET PROCÉDÉ POUR PRODUIRE CETTE BAGUE À PIERRER

(30) Priorität: 03.07.2019 AT 506032019
(43) Veröffentlichungstag der Anmeldung: 06.01.2021
(73) Patentinhaber: Tyrolit GmbH & Co. KG, 58809 Neuenrade (DE)
(72) Erfinder: HEINRICH, Bernd, 58809 Neuenrade (DE)
(74) Vertreter: Torggler & Hofinger Patentanwälte

(56) Entgegenhaltungen:
- WO-A1-99/24203
- DE-A1- 19 530 462
- DE-A1- 19 724 527
- DE-A1- 19 924 253
- DE-A1-102015 111 663
- JP-A- H07 100 710
- JP-A- H08 290 355
- US-A1- 2014 199 920

## Beschreibung

Die Erfindung betrifft einen Honring zur Oberflächenbearbeitung verzahnter Werkstücke, insbesondere zur Oberflächenbearbeitung von Zahnrädern, gemäß dem Oberbegriff des unabhängigen Anspruchs 1, der aus dem Dokument DE 195 30 462 A1 bekannt ist.

Des Weiteren betrifft die Erfindung ein Verfahren zur Herstellung eines Honrings.

Gattungsgemäße Honringe aus Keramik zur Oberflächenbearbeitung verzahnter Werkstücke sind aus dem Stand der Technik bekannt, wobei mit Schleifmittel versehene Keramikflächen die Verzahnung schleifend bearbeiten. Ein Honring, umfassend einen keramischen Arbeitsabschnitt und einen radial nach außen orientierten Außenring, welcher aus einem verglichen mit Keramik zähen Material wie Epoxidharz mit Füllstoffen besteht, ist bereits aus der Schrift DE 195 30 462 A1 bekannt. Der keramische Arbeitsabschnitt ist hierbei zur Steigerung von elastischen Eigenschaften sowie von abrasiven Eigenschaften in Teilarbeitsabschnitte segmentiert, sodass eine Elastizität des Außenringes in den Arbeitsabschnitt über eine elastische Lagerung des Arbeitsabschnittes übertragen werden kann, um eine Sprödheit des Arbeitsabschnittes reduzieren zu können.

Nachteilig am Stand der Technik ist, dass durch die materialspezifischen Charakteristika der Keramik wie beispielsweise Sprödigkeit nur ein Schleifergebnis bedingter Güte generiert werden kann und zudem eine erhöhte Werkzeugbruchanfälligkeit besteht.

Die objektiv technische Aufgabe der vorliegenden Erfindung besteht daher darin, einen gegenüber dem Stand der Technik verbesserten Honring anzugeben, bei welchem die Nachteile des Stands der Technik zumindest teilweise behoben sind, und welcher sich insbesondere dadurch auszeichnet, ein besseres Schleifergebnis und eine reduzierte Werkzeugbruchanfälligkeit zu gewährleisten.

Diese Aufgabe wird durch die Merkmale des Anspruchs 1 sowie durch ein Verfahren mit den Merkmalen des Anspruchs 7 gelöst.

Es ist demnach erfindungsgemäß vorgesehen, dass der ringförmigen Körper aus Keramik in einer radialen Richtung von wenigstens einem Außenring umgeben ist, welcher im Wesentlichen aus wenigstens einem Kunstharz besteht und eine Außenringdicke von mehr als 15 mm aufweist.

Dadurch wird es erst ermöglicht, dass der Außenring den ringförmigen Körper aus Keramik im Honprozess in der Aufnahme von Kräften sowie Dämpfung von Kraftspitzen derart unterstützt, dass Werkzeugbrüche reduziert werden und das Schleifergebnis verbessert wird.

Unter Schleifergebnis ist in diesem Kontext in analoger Betrachtung auch ein Honergebnis des Honringes im Fertigungsverfahren mit geometrisch unbestimmter Schneide zu verstehen.

Durch den wenigstens einen Außenring aus wenigstens einem Kunstharz wird durch die Außenringdicke von mehr als 15 mm eine im Wesentlichen konstante Schneidkraft während des Honprozesses gewährleistet.

Die Außenringdicke von mehr als 15 mm gewährleistet hierbei, dass das wenigstens eine Kunstharz in einem hinreichenden Maße um den ringförmigen Körper aus Keramik vorhanden ist, um die positiven materialspezifischen Eigenschaften des Außenrings auf den ringförmigen Körper aus Keramik zu übertragen. Dabei werden negativen materiaspezifischen Eigenschaften des ringförmigen Körpers aus Keramik wie Sprödigkeit entgegengewirkt und der Verzahnungshonprozess wird begünstigt.

Hinzu kommt die positive Eigenschaft, dass der Außenring durch seine Zusammensetzung und Dimensionierung eine dämpfende Wirkung im Honprozess gewährleistet und somit sowohl das Schleifergebnis begünstigt als auch zur Standzeitverlängerung des Honrings beiträgt.

In diesem Kontext kann in Kontakt bringen bedeuten, dass der ringförmige Körper aus Keramik an der Innenmantelfläche eine in Bezug auf das verzahnte Werkstück kämmende Verzahnung aufweist.

Ferner ist es erfindungsgemäß vorgesehen, dass der ringförmige Körper aus Keramik eine Innenringdicke aufweist, und wobei ein Verhältnis aus Außenringdicke zu Innenringdicke zwischen 2,5:1 und 1,5:1 aufweist.

Dadurch wird es ermöglicht, dass der ringförmige Körper aus Keramik im Honprozess hinreichend durch die positiven Effekte des Außenrings gestützt wird.

Weiters wird es ermöglicht, dass der Außenring nicht derart im Vergleich zum ringförmigen Körper aus Keramik dimensioniert ist, dass er abträgliche Auswirkungen auf das Schleifergebnis hat.

Weiters ist erfindungsgemäß vorgesehen, dass
- in einem ersten Verfahrensschritt der ringförmige Körper aus Keramik, in welchen Schleifmittel eingebettet ist, und welcher an einer Innenmantelfläche eine mit dem verzahnten Werkstück in Kontakt bringbare Verzahnung aufweist, bereitgestellt wird,
- in einem zweiten Verfahrensschritt der ringförmige Körper aus Keramik zentriert in einer Gussform angeordnet wird,
- in einem dritten Verfahrensschritt der ringförmigen Körper aus Keramik in radialer Richtung von einer Kunstharzmasse, welche im Wesentlichen aus wenigstens einem Kunstharz besteht, ringförmig mit einer Dicke von mehr als 15 mm umgossen wird und
- in einem vierten Verfahrensschritt die Kunstharzmasse ausgehärtet wird.

Durch den Schrumpfprozess wird Druck auf den ringförmigen Körper aus Keramik aufgebaut und so eine Vorspannung erzeugt. Dieser Druck führt dazu, dass der ringförmige Körper aus Keramik die bei der Bearbeitung auftretenden Kräfte in höherem Maße aufnimmt. Dadurch wird ein Werkzeugbruch reduziert und ein Schleifergebnis verbessert.

Beispielsweise kann der wenigstens eine Außenring aus einer Schnellgießmasse wie SGL 140 L und zum Beispiel PUR 12 als Härter (insbesondere in einem Verhältnis von Gewichtsanteilen des Harzes und des Härters von 1:1) oder anderweitigen Zweikomponentenpolyurethanen hergestellt werden. Um eine Veränderung des wenigstens einen Außenringes nach der Fertigung zu vermeiden, kann dem wenigstens einen Außenring ein Füllstoff wie beispielsweise Aluminiumhydroxid beigemischt werden.

Als Mischungsverhältnis des wenigstens einen Außenringes haben sich 20 % einer PU-A-Komponente (insbesondere Harz SG 140), 20 % einer PU-B Komponente (insbesondere Härter PUR 12) sowie 60 % eines Füllstoffes (insbesondere durch Beimengung in Form eines Pulvers wie F-B) als besonders günstig erwiesen, um einen formastabilen Honring mit besonders vorteilhaften Honeigenschaften generieren zu können.

Vorteilhafte Ausführungsformen der Erfindung sind in den abhängigen Ansprüchen definiert.

Gemäß einer vorteilhaften Ausgestaltung der Erfindung ist es vorgesehen, dass der Außenring eine Außenringdicke zwischen 25 mm und 100 mm, vorzugsweise eine Außenringdicke zwischen 35 mm und 70 mm, aufweist.

Dadurch wird es ermöglicht, dass die Außenringdicke in einem Bereich liegt, welche die positiven technischen Wirkungen des wenigstens einen Kunstharzes für den Honprozess ideal begünstigt.

Als günstig hat es sich erwiesen, dass der Außenring im Wesentlichen aus einem Epoxidharz und/oder einem Polyurethan und/oder einem Formgedächtnispolymer besteht, und/oder wenigstens einen Härter umfasst.

Epoxidharze zeigen unter Druck Fließeigenschaften, welche nach nur einem geringen Abrichtvorgang optimale Rundlaufeigenschaften aufweisen und eingesetzt werden können. Zudem wird dem Benutzer des Honrings ein Lösen - beispielsweise aus einer Einspannung und/oder einer Gussform -erleichtert. Der Terminus Formgedächtnispolymer bezieht sich auf Kunststoffe mit einem Formgedächtniseffekt und bedeutet, dass sich der Kunststoff auf seine frühere Form trotz einer zwischenzeitlichen Umformung zurückgreifen kann und dadurch seine ursprüngliche Form beispielsweise bei Erwärmung erneut annehmen kann. Durch diese Eigenschaft werden im Wesentlichen zwei Vorteile erzielt, nämlich dahingehend, dass für die für die Herstellung geforderte exakte Zentrierung begünstigt wird, da ein ausgleichender Effekt auf wirkende Normalkräfte generiert wird und im Einsatz das Material bei Prozessschwankungen eine ausgleichende Wirkung entfaltet, um beim Honprozess ein höheres Maß an Güte zu gewährleisten.

Aufgrund der geringen Wärmeleitfähigkeit von Polymeren weisen Sie eine geringe Schaltzeit auf. Formgedächtnispolymere schalten jeweils im weichen Zustand und weisen einen niedrigen E-Modul auf. Formgedächtnislegierungen weisen zudem auch einen Zweiweg-Memory-Effekt auf.

Dadurch wird es ermöglicht, dass die Zusammensetzung des Außenrings ideal auf die Anforderungen des Honprozesses abgestimmt werden kann und/oder das Schleifresultat optimal begünstigt.

Gemäß einer vorteilhaften Ausführungsform der Erfindung ist es vorgesehen, dass
- in den ringförmigen Körper aus Keramik Schleifmittel in Form von Aluminiumoxid und/oder Schmelz-, Edel- oder Sinterkorund eingebettet ist, und/oder
- der ringförmigen Körper aus Keramik einen Schleifmittelanteil zwischen 25 und 75 Volumenprozent, vorzugsweise zwischen 42 und 55 Volumenprozent, aufweist, und/oder
- der ringförmigen Körper aus Keramik eine Dichte zwischen 1,5 und 3,5 g/cm³, vorzugsweise zwischen 2,1 und 2,8 g/cm³, aufweist.

Diese Parameter des Schleifmittels haben sich als besonders günstig für den Honprozess von verzahnten Werkstücken bewährt.

Als vorteilhaft hat sich erwiesen, dass die Verzahnung der Innenmantelfläche des ringförmigen Körpers aus Keramik Zähne aufweisen, welche sich in einer axialen Richtung im Wesentlichen über eine Gesamtbreite des ringförmigen Körper aus Keramik erstrecken, und/oder gegenüber einer axialen Richtung schräg gestellt sind.

Dadurch wird es ermöglicht, dass die Gesamtbreite des ringförmigen Körpers aus Keramik am Honprozess mitwirkt und somit Zeit bei der Bearbeitung des verzahnten Werkstückes eingespart werden kann.

Weiters können durch eine Schrägstellung der Zähne relativ zu einer Rotationsachse auch verzahnte Werkstücke mit schräggestellten Verzahnungen wie beispielsweise schrägverzahnte Zahnräder bearbeitet werden.

Eine vorteilhafte Variante besteht darin, dass der Außenring schleifmittelfrei ausgebildet ist.

Dadurch wird es ermöglicht, dass Schleifmittel die Zusammensetzung des Außenrings und dadurch die materialspezifischen Vorteile des wenigstens einen Kunstharzes im Außenring nicht negativ beeinflussen.

Besonders bevorzugt ist, dass sich die Dicke der Kunstharzmasse im Zuge des vierten Verfahrensschritts reduziert.

Dadurch wird es ermöglicht, dass ein Druck auf den ringförmigen Körper aus Keramik aufgebaut wird, wobei der Druck dazu führt, dass der ringförmige Körper aus Keramik die bei der Bearbeitung auftretenden Kräfte in höherem Maße aufnehmen kann.

Vorteilhaft ist hierbei, dass resultierend aus der begünstigten Kraftkompensation der Werkzeugbruch reduziert und das Schleifergebnis verbessert wird und/oder die dämpfende Wirkung des Außenrings aus wenigstens einem Kunstharz auf den ringförmigen Körper aus Keramik besonders günstig hervortritt.

Bei einem Ausführungsbeispiel der Erfindung ist vorgesehen, dass die Kunstharzmasse im Zuge des vierten Verfahrensschritts im Wesentlichen bei Raumtemperatur ausgehärtet wird.

Dadurch wird es ermöglicht, dass keine zusätzlichen Komponenten zur Kühlung oder Erwärmung der Kunstharzmasse für den Aushärteprozess benötigt werden.

Als günstig hat sich erwiesen, dass der ringförmige Körper aus Keramik zwischen dem ersten und zweiten Verfahrensschritt, vorzugsweise durch ein spanabhebendes Verfahren, bearbeitet wird.

Dadurch wird es ermöglicht, dass eine Außenmantelfläche des ringförmigen Körpers aus Keramik eine hohe Oberflächengüte aufweist und ein für die weiteren Verfahrensschritte geforderter Durchmesser der Außenmantelfläche präzise eingestellt werden kann.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: einen Honring in seiner Gesamtheit in einer perspektivischen Ansicht mit einer Detailansicht eines Zahnes mit Schleifmittel,
- Fig. 2: einen Honring in einer Schnittdarstellung in einer perspektivischen Ansicht.

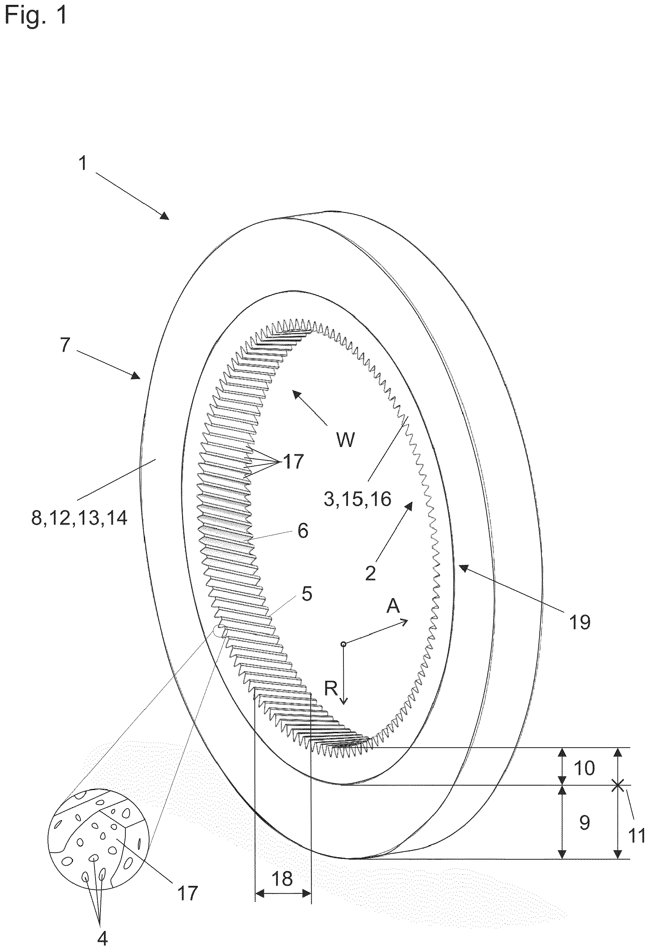

Fig. 1 zeigt einen Honring 1 zur Oberflächenbearbeitung verzahnter Werkstücke W, insbesondere zur Oberflächenbearbeitung von Zahnrädern, umfassend einen ringförmigen Körper 2 aus Keramik 3, welcher an einer Innenmantelfläche 5 eine mit dem verzahnten Werkstück W in Kontakt bringbare Verzahnung 6 aufweist.

In einer Detailansicht eines Zahnes 17 ist das eingebettete Schleifmittel 4 ersichtlich.

Der ringförmigen Körper 2 aus Keramik 3 ist in einer radialen Richtung R von einem Außenring 7 umgeben, welcher im Wesentlichen aus einer Mischung aus Kunstharzen 8 besteht.

Eine Außenringdicke 9 weist erfindungsgemäß mehr als 15 mm auf. Die Außenringdicke 9 kann im Bereich zwischen 25 mm und 100 mm, vorzugsweise im Bereich zwischen 35 mm und 70 mm, liegen.

Der ringförmige Körper 2 aus Keramik 3 weist eine Innenringdicke 10 auf, wobei ein Verhältnis 11 aus der Außenringdicke 9 zu der Innenringdicke 10 im Bereich zwischen 2,5:1 und 1,5:1 liegt.

Der Außenring 7 des Honrings 1 besteht im Wesentlichen aus einem Epoxidharz 12 und/oder einem Polyurethan 13 und/oder einem Formgedächtnispolymer. Der Außenring 7 umfasst einen Härter 14.

Beispielsweise kann eine Zweikomponenten-Kunstharzmischung, umfassend Epoxidharz 12 mit Polyurethan 13 als Härter verwendet werden.

In den ringförmigen Körper 2 aus Keramik 3 ist Schleifmittel 4 in Form von Aluminiumoxid 15 und/oder Schmelz-, Edel- oder Sinterkorund 16 eingebettet.

Ein Schleifmittelanteil des ringförmigen Körpers 2 aus Keramik 3 ist aus Übersichtlichkeitsgründen nicht dargestellt, beträgt jedoch zwischen 25 und 75 Volumenprozent, vorzugsweise zwischen 42 und 55 Volumenprozent.

Der Bindungsanteil liegt im Bereich von 8-30 Volumenprozent. Ein verbleibender Volumenprozentanteil ist durch das Volumen der Poren gegeben.

Eine Dichte des ringförmigen Körpers 2 aus Keramik 3 ist aus Übersichtlichkeitsgründen nicht dargestellt, beträgt jedoch zwischen 1,5 und 3,5 g/cm³, vorzugsweise zwischen 2,1 und 2,8 g/cm³.

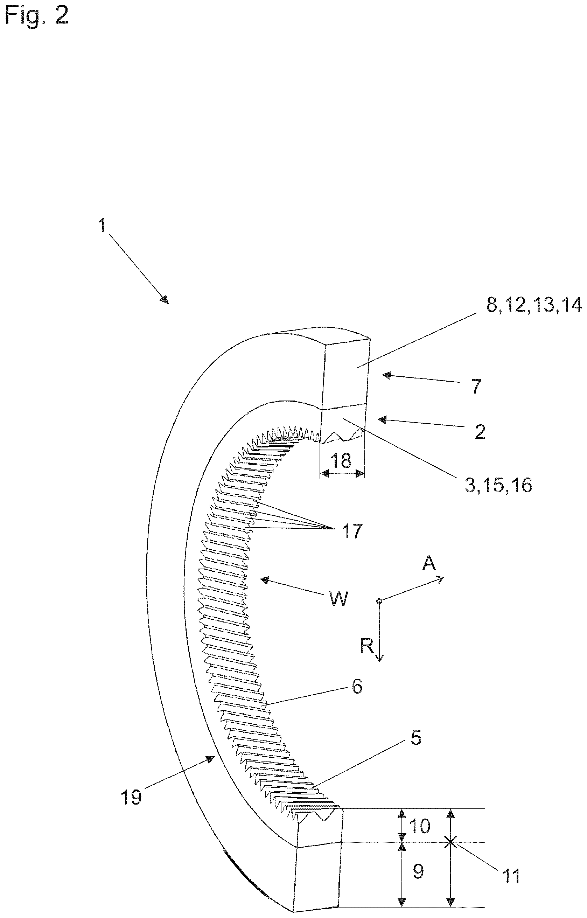

Fig. 2 zeigt einen Honring 1 gemäß dem in Fig. 1 dargestellten Ausführungsbeispiel, welcher zur Darstellung mittig geschnitten ist.

Die Verzahnung 6 der Innenmantelfläche 5 des ringförmigen Körpers 2 aus Keramik 3 weist eine Vielzahl an Zähnen 17 auf, welche sich in einer axialen Richtung A im Wesentlichen über eine Gesamtbreite 18 des ringförmigen Körper 2 aus Keramik 3 erstrecken.

Dieses Ausführungsbeispiel zeigt Zähne 17, welche gegenüber einer axialen Richtung A schräg gestellt sind. Die Zähne 17 können jedoch im Allgemeinen auch in axialer Richtung A ausgerichtet sein.

Die Form der Verzahnung 6 ist im Allgemeinen beliebig. Besonders bevorzugt ist jedoch eine Verzahnung 6, welche korrespondierend zu einer EvolventenVerzahnung oder einer Zykloiden-Verzahnung ist.

Der Außenring 7 ist schleifmittelfrei ausgebildet.

In einem ersten Verfahrensschritt wird der ringförmige Körper 2 aus Keramik 3 bereitgestellt, in einem weiteren Verfahrensschritt wird der ringförmige Körper 2 aus Keramik 3 zentriert in einer Gussform angeordnet, in einem weiteren Verfahrensschritt wird der ringförmigen Körper 2 aus Keramik 3 in radialer Richtung R von einer Kunstharzmasse, welche im Wesentlichen aus wenigstens einem Kunstharz 8 besteht, ringförmig mit einer Dicke von mehr als 15 mm umgossen und in einem weiteren Verfahrensschritt wird die Kunstharzmasse ausgehärtet.

Der ringförmige Körper 2 aus Keramik 3 kann durch Pressung und anschließender Sinterung vorgefertigt werden. Der ringförmige Körper 2 aus Keramik 3 wird anschließend an einer Außenmantelfläche 19 abgeschliffen, um einen gewünschten Außendurchmesser bereitzustellen.

Der ringförmige Körper 2 aus Keramik 3 kann zwischen dem ersten und zweiten Verfahrensschritt, vorzugsweise durch ein spanabhebendes Verfahren, bearbeitet werden.

In einem Ausführungsbeispiel wird vor dem Schleifvorgang des ringförmigen Körpers 2 aus Keramik 3, vorzugsweise 5 bis 15 mm, Keramikmaterial mit einem Drehwerkzeug abgetragen.

In einem Ausführungsbeispiel wird ein Planlauf nach dem Honprozess mit einer Messuhr überprüft.

Die Gussform wird in Abhängigkeit eines Durchmessers einer Außenmantelfläche 19 und der Gesamtbreite 18 der Außenmantelfläche 19 und/oder an einen Außendurchmesser des Außenrings 7 angepasst. Die Gesamtbreite 18 des Außenrings 7 und des ringförmigen Körpers 2 sind im Wesentlichen identisch.

Das Kunstharz 8 wird vor dem Eingießen in die Gussform angerührt. Besonders bevorzugt hat sich hierbei ein Mischen einer Zweikomponentenverbindung erwiesen.

Als Material für den Außenring 7 kann beispielsweise eine Schnellgießmasse wie SG 140 L und ein Härter 14 wie beispielsweise PUR 12 verwendet werden.

SG 140 L als Schnellgießmasse ist eine hochwertige, nahezu geruchlose Zweikomponenten-Polyurethan-Gießmasse. Die Füllstoffe werden beim Vermischen der beiden Komponenten miteingerührt. Das Bindemittel ist nach der Aushärtung ohne Temperung sehr temperaturbeständig und hat hohe Festigkeitswerte. Die Zusammensetzung der Füllstoffe ist an sich beliebig.

PUR 12 als Härter 14 weist ohne Füllstoffe im Wesentlichen
- eine Viskosität der Mischung von 70-90 mPas, und/oder
- eine Dichte der Mischung von 1,05 kg/dm³, und/oder
- eine Shore-Härte von 70-75 bei 20 °C, und/oder
- eine Zugfestigkeit von 35 N/mm², und/oder
- eine Biegefestigkeit von 35-40 N/mm², und/oder
- eine Schlagzähigkeit von 15-20 KJ/m² und/oder
- eine Temperaturbeständigkeit von ca. 80 °C auf.

Das Mischungsverhältnis von SG 140 L zu PUR12 ist im Wesentlichen 1:1. Eine Verarbeitungs- und Aushärtetemperatur liegt im Wesentlichen bei 18-25 °C und eine entformbare Aushärtezeit beträgt im Wesentlichen 2-2,5 h.

Besonders bevorzugt wird das Kunstharz 8 bei einer Temperatur im Bereich von 15 bis 30 Grad, vorzugsweise bei Raumtemperatur, in die Gussform gegossen.

Nach dem letzten Verfahrensschritt zur Herstellung des Honrings 1 wird die Gussform gereinigt und für eine weitere Verwendung eingelagert.

Die ringförmige Umgießung erstreckt sich im Wesentlichen über die gesamte Außenmantelfläche 19 des ringförmigen Körpers 2 aus Keramik 3. Die Dicke von mehr als 15 mm ist im Wesentlichen gleichmäßig über die Außenmantelfläche 19 verteilt.

Die Dicke der Kunstharzmasse wird im Zuge des vierten Verfahrensschritts verringert. Dieser Prozess geschieht automatisch durch den Abkühlungsprozess auch bei im Wesentlichen Raumtemperatur während des Aushärteprozesses. Das Verringern der Dicke der Kunstharzmasse auf die letztendliche Außenringdicke 9 des Außenrings 7 verläuft analog zu einem Schrumpfprozess des Kunstharzes 8.

## Patentansprüche

1. Honring (1) zur Oberflächenbearbeitung verzahnter Werkstücke (W), insbesondere zur Oberflächenbearbeitung von Zahnrädern, umfassend einen ringförmigen Körper (2) aus Keramik (3), in welchen Schleifmittel (4) eingebettet ist, und welcher an einer Innenmantelfläche (5) eine mit dem verzahnten Werkstück (W) in Kontakt bringbare Verzahnung (6) aufweist, wobei der ringförmigen Körper (2) aus Keramik (3) in einer radialen Richtung (R) von wenigstens einem Außenring (7) umgeben ist, welcher im Wesentlichen aus wenigstens einem Kunstharz (8) besteht, und eine Innenringdicke (10) aufweist, **dadurch gekennzeichnet, dass** der Außenring (7) eine Außenringdicke (9) von mehr als 15 mm aufweist, wobei ein Verhältnis (11) aus Außenringdicke (9) zu Innenringdicke (10) zwischen 2,5:1 und 1,5:1 aufweist.

2. Honring (1) nach Anspruch 1, wobei der Außenring (7) eine Außenringdicke (9) zwischen 25 mm und 100 mm, vorzugsweise eine Außenringdicke (9) zwischen 35 mm und 70 mm, aufweist.

3. Honring (1) nach einem der vorangehenden Ansprüche, wobei der Außenring (7) im Wesentlichen aus einem Epoxidharz (12) und/oder einem Polyurethan (13) und/oder einem Formgedächtnispolymer besteht, und/oder wenigstens einen Härter (14) umfasst.

4. Honring (1) nach einem der vorangehenden Ansprüche, wobei
- in den ringförmigen Körper (2) aus Keramik (3) Schleifmittel (4) in Form von Aluminiumoxid (15) und/oder Schmelz-, Edel- oder Sinterkorund (16) eingebettet ist, und/oder
- der ringförmige Körper (2) aus Keramik (3) einen Schleifmittelanteil zwischen 25 und 75 Volumenprozent, vorzugsweise zwischen 42 und 55 Volumenprozent, aufweist, und/oder
- der ringförmige Körper (2) aus Keramik (3) eine Dichte zwischen 1,5 und 3,5 g/cm³, vorzugsweise zwischen 2,1 und 2,8 g/cm³, aufweist.

5. Honring (1) nach einem der vorangehenden Ansprüche, wobei die Verzahnung (6) der Innenmantelfläche (5) des ringförmigen Körpers (2) aus Keramik (3) Zähne (17) aufweist, welche sich in einer axialen Richtung (A) im Wesentlichen über eine Gesamtbreite (18) des ringförmigen Körpers (2) aus Keramik (3) erstrecken und/oder gegenüber einer axialen Richtung (A) schräg gestellt sind.

6. Honring (1) nach einem der vorangehenden Ansprüche, wobei der Außenring (7) schleifmittelfrei ausgebildet ist.

7. Verfahren zur Herstellung eines Honrings (1) nach einem der Ansprüche 1 bis 6, **dadurch gekennzeichnet, dass**
- in einem ersten Verfahrensschritt der ringförmige Körper (2) aus Keramik (3), in welchen Schleifmittel (4) eingebettet ist und welcher an einer Innenmantelfläche (5) eine mit dem verzahnten Werkstück (W) in Kontakt bringbare Verzahnung (6) aufweist, bereitgestellt wird,
- in einem zweiten Verfahrensschritt der ringförmige Körper (2) aus Keramik (3) zentriert in einer Gussform angeordnet wird,
- in einem dritten Verfahrensschritt der ringförmige Körper (2) aus Keramik (3) in radialer Richtung (R) von einer Kunstharzmasse, welche im Wesentlichen aus wenigstens einem Kunstharz (8) besteht, ringförmig mit einer Dicke von mehr als 15 mm umgossen wird und
- in einem vierten Verfahrensschritt die Kunstharzmasse ausgehärtet wird.

8. Verfahren nach Anspruch 7, wobei sich die Dicke der Kunstharzmasse im Zuge des vierten Verfahrensschritts reduziert.

9. Verfahren nach Anspruch 7 oder 8, wobei die Kunstharzmasse im Zuge des vierten Verfahrensschritts im Wesentlichen bei Raumtemperatur ausgehärtet wird.

10. Verfahren nach einem der Ansprüche 7 bis 9, wobei der ringförmige Körper (2) aus Keramik (3) zwischen dem ersten und zweiten Verfahrensschritt, vorzugsweise durch ein spanabhebendes Verfahren, bearbeitet wird.

## Claims

1. A honing ring (1) for the surface machining of toothed workpieces (W), in particular for the surface machining of toothed gears, including an annular body (2) of ceramic (3) in which abrasive agent (4) is embedded and which at an inner peripheral surface (5) has a tooth arrangement (6) which can be brought into contact with the toothed workpiece (W), wherein the annular body (2) of ceramic (3) is surrounded in a radial direction (R) by at least one outer ring (7) which substantially comprises at least one synthetic resin (2) and is of an inner ring thickness (10), **characterised in that** the outer ring (7) is of an outer ring thickness (9) of more than 15 mm, wherein a ratio (11) of outer ring thickness (9) to inner ring thickness (10) is between 2.5:1 and 1.5:1.

2. The honing ring (1) according to claim 1 wherein the outer ring (7) is of an outer ring thickness (9) of between 25 mm and 100 mm, preferably an outer ring thickness (9) of between 35 mm and 70 mm.

3. The honing ring (1) according to one of the preceding claims wherein the outer ring (7) substantially includes an epoxy resin (12) and/or a polyurethane (13) and/or a shape memory polymer and/or includes at least one hardener (14).

4. The honing ring (1) according to one of the preceding claims wherein
- embedded in the annular body (2) of ceramic (3) is abrasive agent (4) in the form of aluminium oxide (15) and/or fused, white or sintered corundum (16), and/or
- the annular body (2) of ceramic (3) has an abrasive agent proportion of between 25 and 75 percent by volume, preferably between 42 and 55 percent by volume, and/or
- the annular body (2) of ceramic (3) is of a density of between 1.5 and 3.5 g/cm³, preferably between 2.1 and 2.8 g/cm³.

5. The honing ring (1) according to one of the preceding claims wherein the tooth arrangement (6) of the inner peripheral surface (5) of the annular body (2) of ceramic (3) has teeth (17) which extend in an axial direction (A) substantially over an entire width (18) of the annular body (2) of ceramic (3) and/or are set inclinedly with respect to an axial direction (A).

6. The honing ring (1) according to one of the preceding claims wherein the outer ring (7) is abrasive agent-free.

7. A method of producing a honing ring (1) according to one of claims 1 to 6 **characterised in that**:
- in a first method step there is provided the annular body (2) of ceramic (3), in which abrasive agent (4) is embedded and which at an inner peripheral surface (5) has a tooth arrangement (6) which can be brought into contact with the toothed workpiece (W),
- in a second method step the annular body (2) of ceramic (3) is arranged centred in a casting mould,
- in a third method step the annular body (2) of ceramic (3) is cast around in the radial direction by a synthetic resin material which substantially comprises at least one synthetic resin (8) in ring form with a thickness of more than 15 mm, and
- in a fourth method step the synthetic resin material is hardened.

8. The method according to claim 7 wherein the thickness of the synthetic resin material is reduced in the course of the fourth method step.

9. The method according to claim 7 or claim 8 wherein the synthetic resin material is hardened substantially at room temperature in the course of the fourth method step.

10. The method according to one of claims 7 to 9 wherein the annular body (2) of ceramic (3) is machined between the first and the second method steps, preferably by a machining method.

## Revendications

1. Bague de rodage à la pierre (1) pour le traitement de surface de pièces dentées (W), en particulier pour le traitement de surface de roues dentées, comprenant un corps de forme annulaire (2) composé de céramique (3), dans lequel sont incorporés des agents abrasifs (4) et lequel présente sur une surface enveloppante intérieure (5) une denture (6) pouvant être amenée en contact avec la pièce dentée (W), dans laquelle
le corps de forme annulaire (2) composé de céramique (3) est entouré dans une direction radiale (R) d'au moins une bague extérieure (7), laquelle est constituée sensiblement d'au moins une résine synthétique (8), et présente une épaisseur de bague intérieure (10), **caractérisée en ce que** la bague extérieure (7) présente une épaisseur de bague extérieure (9) supérieure à 15 mm, dans laquelle un rapport (11) entre l'épaisseur de bague extérieure (9) et l'épaisseur de bague intérieure (10) est compris entre 2,5:1 et 1,5:1.

2. Bague de rodage à la pierre (1) selon la revendication 1, dans laquelle la bague extérieure (7) présente une épaisseur de bague extérieure (9) entre 25 mm et 100 mm, de préférence une épaisseur de bague extérieure (9) entre 35 mm et 70 mm.

3. Bague de rodage à la pierre (1) selon l'une quelconque des revendications précédentes, dans laquelle la bague extérieure (7) est constituée sensiblement d'une résine époxy (12) et/ou d'un polyuréthane (13) et/ou d'un polymère à mémoire de forme, et/ou comprend au moins un agent durcisseur (14).

4. Bague de rodage à la pierre (1) selon l'une quelconque des revendications précédentes, dans laquelle
- un agent abrasif (4) sous la forme d'oxyde d'aluminium (15) et/ou de corindon fondu, du corindon raffiné ou du corindon fritté (16) est incorporé dans le corps de forme annulaire (2) composé de céramique (3), et/ou
- le corps de forme annulaire (2) composé de céramique (3) présente une proportion d'agent abrasif entre 25 et 75 % en volume, de préférence entre 42 et 55 % en volume, et/ou
- le corps de forme annulaire (2) composé de céramique (3) présente une densité entre 1,5 à 3,5 g/cm³, de préférence entre 2,1 et 2,8 g/cm³.

5. Bague de rodage à la pierre (1) selon l'une quelconque des revendications précédentes, dans laquelle la denture (6) de la surface enveloppante intérieure (5) du corps de forme annulaire (2) composé de céramique (3) présente des dents (17), lesquelles s'étendent dans une direction axiale (A) sensiblement sur la totalité d'une largeur (18) du corps de forme annulaire (2) composé de céramique (3) et/ou sont placées à l'oblique par rapport à une direction axiale (A).

6. Bague de rodage à la pierre (1) selon l'une quelconque des revendications précédentes, dans laquelle la bague extérieure (7) est réalisée sans agent abrasif.

7. Procédé pour fabriquer une bague de rodage à la pierre (1) selon l'une quelconque des revendications 1 à 6, **caractérisé en ce que**
- lors d'une première étape de procédé, le corps de forme annulaire (2) composé de céramique (3) est fourni, dans lequel un agent abrasif (4) est incorporé et lequel présente sur une surface enveloppante intérieure (5) une denture (6) pouvant être amenée en contact avec la pièce dentée (W),
- lors d'une deuxième étape de procédé, le corps de forme annulaire (2) composé de céramique (3) est disposé de manière centrée dans un moule,
- lors d'une troisième étape de procédé, le corps de forme annulaire (2) composé de céramique (3) est enrobé dans une direction radiale (R) d'une masse de résine synthétique, laquelle est constituée sensiblement d'au moins une résine synthétique (8), de manière annulaire avec une épaisseur supérieure à 15 mm, et
- lors d'une quatrième étape de procédé, la masse de résine synthétique est durcie.

8. Procédé selon la revendication 7, dans lequel l'épaisseur de la masse de résine synthétique se réduit dans le cadre de la quatrième étape de procédé.

9. Procédé selon la revendication 7 ou 8, dans lequel la masse de résine synthétique est durcie dans le cadre de la quatrième étape de procédé sensiblement à température ambiante.

10. Procédé selon l'une quelconque des revendications 7 à 9, dans lequel le corps de forme annulaire (2) composé de céramique (3) est usiné entre la première et la deuxième étape de procédé, de préférence par un procédé par enlèvement de copeaux.
